# EUROPÄISCHE PATENTSCHRIFT

(11) **EP 2 676 250 B1**
(45) Veröffentlichungstag und Bekanntmachung des Hinweises auf die Patenterteilung: **29.06.2016**
(21) Anmeldenummer: 12708792.2
(22) Anmeldetag: 16.02.2012
(51) Int. Cl.: G07D 7/16, G07D 11/00, B41J 13/00, B65H 29/00, B65H 5/02, H04N 1/00, B65H 15/00, B65H 29/58

(54) **VORRICHTUNG ZUM ENTWERTEN VON SCHECKS**
DEVICE FOR CANCELLING CHECKS
DISPOSITIF D'OBLITÉRATION DE CHÈQUES

(30) Priorität: 17.02.2011 DE 102011000785
(43) Veröffentlichungstag der Anmeldung: 25.12.2013
(73) Patentinhaber: Wincor Nixdorf International GmbH, 33106 Paderborn (DE)
(72) Erfinder: PETERMANN, Udo, 33184 Altenbeken (DE); FREITAG, Paul, 32839 Steinheim (DE); DÜSTERHUS, Richard, 33106 Paderborn (DE); HÖSCHEN, Hendrik, 33104 Paderborn (DE)
(74) Vertreter: Schaumburg und Partner Patentanwälte mbB
(86) Internationale Anmeldenummer: PCT/EP2012/052659
(87) Internationale Veröffentlichungsnummer: WO 2012/110586

(56) Entgegenhaltungen:
- WO-A1-99/46738
- WO-A2-03/077209
- US-B1- 6 257 783

## Beschreibung

Die Erfindung betrifft eine Vorrichtung zum Entwerten von Wertscheinen, die eine Transporteinheit zum Transport der Wertscheine und eine Druckeinheit mit einem Druckkopf zum Bedrucken eines Wertscheins mit einem Entwertungsdruckbild umfasst. Ferner hat die Vorrichtung einen Zwischenspeicher zum Zwischenspeichern von Wertscheinen.

Bei Vorrichtungen zur Handhabung von Wertscheinen, in die auch Schecks eingegeben werden können, werden diese Schecks, nachdem ihre Echtheit überprüft wurde und auf ihnen aufgedruckte Informationen ausgelesen wurden, in einem Zwischenspeicher gespeichert. Nachdem alle zusammen eingegebenen Wertscheine in dem Zwischenspeicher aufgenommen wurden, wird eine Bedienperson aufgefordert, eine angezeigte Information mit Informationen über die zwischengespeicherten Wertscheine zu bestätigen. Erfolgt eine solche Bestätigung durch die Bedienperson, so werden die in dem Zwischenspeicher aufgenommenen Schecks in eine Wertscheinkassette transportiert und dort aufbewahrt. Zuvor werden die dem Zwischenspeicher entnommenen Schecks durch das Aufdrucken eines Entwertungsdruckbildes in einem voreingestellten Druckbereich auf einer Druckseite der Schecks bedruckt, um somit eine nochmalige Verarbeitung der Schecks auszuschließen.

Eine solche Druckeinheit zum Bedrucken der Schecks mit dem Entwertungsdruckbild ist beispielsweise aus dem Dokument DE 10 2005 003 198 A1 bekannt. Aus dem Dokument EP 0 690 791 B1 ist eine Belegdruckeinrichtung bekannt, die eine Auswerteeinheit umfasst, die einerseits über Kontrollmarkenabtastmittel das Vorhandensein eines Druckkontrollzeichens abtastet und andererseits das Abtastergebnis auswertet.

Wie bereits erwähnt, ist der Druckbereich, in den ein Entwertungsdruckbild aufgedruckt werden muss, festgelegt. Insbesondere ist ein solcher Druckbereich nur an einer Seite des Schecks vorgesehen, so dass die Ausrichtung, d.h. die Seite, mit der der Scheck einem Druckkopf der Druckeinheit zugewandt ist, die tatsächlich bedruckbare Seite des Schecks festlegt. Ein Möglichkeit um sicherzustellen, dass jeder zugeführte Scheck unabhängig von seiner Ausrichtung bedruckt werden kann, ist es mindestens zwei Druckköpfe vorzusehen, wobei diese an entgegengesetzten Seiten des Transportpfades, entlang dessen die Schecks transportiert werden, angeordnet sind, so dass die Schecks unabhängig von ihrer Ausrichtung bedruckt werden können. Problematisch hieran ist, dass hierfür zwei Druckköpfe vorgesehen werden müssen, was zum einen kostenintensiv ist und zum anderen viel Bauraum beansprucht.

Eine alternative denkbare Möglichkeit ist es, einen Druckkopf vorzusehen, der derart bewegbar gelagert ist, dass er zwischen den beiden Seiten des Transportpfades verstellbar ist und der Druckbereich eines Schecks unabhängig von der Ausrichtung dieses Schecks bedruckt werden kann. Auch hierbei ist es problematisch, dass hierfür eine komplexe aufwendige Lagerung notwendig ist, die zum einen viel Bauraum benötigt und zum anderen hohe Kosten verursacht.

Eine weitere denkbare Möglichkeit ist es, nur Schecks, die in richtiger Ausrichtung in die Vorrichtung eingegeben werden, weiterzuverarbeiten und über die Druckeinheit zu bedrucken. Schecks die verkehrt herum eingegeben werden, werden wieder an die Bedienperson ausgegeben. Problematisch hieran ist, dass dies einen geringen Bedienkomfort für die Bedienperson nach sich zieht, da diese darauf achten muss, mit welcher Ausrichtung sie die Schecks eingibt und ggf. wieder ausgegebene Schecks erneut eingeben muss.

Aus dem Dokument US 6,257,783 B1 ist ein Drucker zum Bedrucken von Schecks bekannt, bei dem ein Wenden der Schecks erfolgt.

Das Dokument WO 99/6738 A1 beschreibt einen Dokumentenscanner, bei dem eingegebene Schecks zunächst einem ersten Druckkopf und anschließend über eine Wendeschleife an einem zweiten Druckkopf vorbeigeführt werden, sodass beide Seiten bedruckt werden können.

Aus dem Dokument WO 03/077209 A2 ist ein Transportsystem für Banknoten bekannt, bei dem eine bidirektionale antreibbare Dreiwegeweiche vorgesehen ist, mit deren Hilfe die Banknoten gewendet werden können.

Es ist Aufgabe der Erfindung, eine Vorrichtung zum Entwerten von Wertscheinen anzugeben, die einfach und platzsparend aufgebaut ist und einen hohen Bedienkomfort für eine Bedienperson bietet.

Diese Aufgabe wird durch eine Vorrichtung mit den Merkmalen des Anspruchs 1 gelöst. Vorteilhafte Weiterbildungen der Erfindung sind in den abhängigen Ansprüchen angegeben.

Erfindungsgemäß sind eine Weiche zum Umlenken von Wertscheinen zwischen einem ersten Transportpfad, einem zweiten Transportpfad und einem dritten Transportpfad sowie eine Steuereinheit zur Steuerung der Weiche vorgesehen. Ferner ist ein Sensor zur Ermittlung der Ausrichtung eines Wertscheins vorgesehen, wobei der zweite Transportpfad die Weiche mit dem Zwischenspeicher und der dritte Transportpfad die Weiche mit der Druckeinheit verbindet. Durch die Ansteuerung der Weiche durch die Steuereinheit in Abhängigkeit der ermittelten Ausrichtung derart, dass die Weiche dem Zwischenspeicher entnommene, zu entwertenden Wertscheine entweder direkt von dem zweiten Transportpfad in den dritten Transportpfad lenkt, oder zunächst von dem zweiten Transportpfad in den ersten und dann von dem ersten in den dritten Transportpfad lenkt, wird erreicht, dass der Wertschein unabhängig von der Ausrichtung, in der er der Vorrichtung zugeführt wird, immer an seiner Druckseite bedruckt werden kann, da die Druckseite durch das entsprechende Zuführen des Wertscheins zu der Druckeinheit immer dem Druckkopf zugewandt ist. Somit muss lediglich ein Druckkopf vorgesehen werden, so dass ein platzsparender, kostengünstiger Aufbau erreicht wird. Ferner kann somit eine Bedienperson der Vorrichtung zur Handhabung von Wertscheinen, in der die Vorrichtung zum Entwerten von Wertscheinen angeordnet ist, diese Wertscheine in beliebiger Ausrichtung eingeben, so dass ein hoher Bedienkomfort gegeben ist.

Bei den Wertscheinen handelt es sich insbesondere um Schecks, die an einem festgelegten, an einer Druckseite der Schecks angeordneten Druckbereich mit dem Entwertungsdruckbild bedruckt werden müssen, um somit eine mehrfache Verarbeitung der Schecks auszuschließen. Der Druckbereich kann auf der Vorderseite oder auf der Rückseite des Schecks festgelegt sein. Die erfindungsgemäße Vorrichtung zum Entwerten von Schecks wird insbesondere in Vorrichtungen zur Handhabung von Wertscheinen eingesetzt, denen Schecks und Banknoten gemischt in einem Wertscheinstapel zugeführt werden können. Anschließend werden die Wertscheine vereinzelt und die Echtheit der Wertscheine wird überprüft. Ferner werden aufgedruckte Informationen der Wertscheine ausgelesen und ausgewertet. Beim Auswerten kann eine Texterkennung zum Extrahieren von aufgedruckten Informationen durchgeführt werden.

Unter dem Lenken eines Wertscheins von einem Transportpfad in einem anderen Transportpfad durch die Weiche wird insbesondere vorstanden, dass die Weiche den mit Hilfe von Transportelementen transportierten Wertschein von dem einen in den anderen Transportpfad führt. Hierbei kann die Weiche die Richtung, in die der Wertschein transportiert verändern oder auch nicht verändern.

Zum Ermitteln der Ausrichtung der Wertscheine wird insbesondere der Sensor der Sensoreinheit, mit dessen Hilfe auch die Echtheit der Wertscheine überprüft wird, verwendet, so dass hierfür kein separater Sensor vorgesehen sein muss und somit ein einfacher, kostengünstiger Aufbau erreicht wird.

Unter der Ausrichtung der Wertscheine wird insbesondere verstanden, wie herum der Wertschein der Vorrichtung zugeführt wird. Insbesondere wird hierunter verstanden, ob Zuführen des Wertscheins die Vorderseite oder die Rückseite nach oben gerichtet ist.

Die Steuereinheit ermittelt in Abhängigkeit der ermittelten Ausrichtung insbesondere, welche Seite des Wertscheins dem Druckkopf zugewandt wäre, wenn der Wertscheine direkt vom zweiten Transportpfad in den dritten Transportpfad und weiter zur Druckeinheit transportiert würde. Ergibt diese Ermittlung, dass die festgelegte Druckseite dem Druckkopf zugewandt wäre, so steuert die Steuereinheit die Weiche derart an, dass diese den Wertschein direkt vom zweiten Transportpfad in den dritten Transportpfad transportiert und somit der Druckeinheit derart zuführt, dass die gewünschte festgelegte Druckseite den Druckkopf zugewandt ist. Somit kann der Druckbereich des Wertscheins mit Hilfe des Druckkopfes mit dem Entwertungsdruckbild bedruckt werden.

Ergibt die Ermittlung hingegen, dass der Wertschein der Druckeinheit derart zugeführt würde, dass die gewünschte festgelegte Druckseite von dem Druckkopf abgewandt wäre, so steuert die Steuereinheit die Weiche derart an, dass diese den Wertschein zunächst von dem zweiten Transportpfad in den ersten Transportpfad und anschließend von dem ersten Transportpfad in den dritten Transportpfad lenkt. Hierdurch wird der Wertschein gewendet, so dass nun die gewünschte festgelegte Druckseite dem Druckkopf zugewandt ist, wenn der Wertschein der Druckeinheit zugeführt wird.

Somit wird erreicht, dass ohne das Vorsehen weiterer Bauteile die gewünschte festgelegte Druckseite des Wertscheins mit Hilfe nur eines Druckkopfs bedruckt werden kann, unabhängig davon, wie herum der Wertschein der Vorrichtung zugeführt wird. Insbesondere ist es nicht notwendig, eine separate Wendeeinheit zum Wenden der Wertscheine vorzusehen.

Die Sensoreinheit ist insbesondere im ersten Transportpfad angeordnet, so dass zunächst die Ausrichtung der Wertscheine bestimmt wird, noch bevor diese durch die Weiche von dem ersten Transportpfad in den zweiten Transportpfad und weiter zum Zwischenspeicher geführt werden. Bei einer alternativen Ausführungsform der Erfindung kann die Sensoreinheit auch in dem zweiten Transportpfad zwischen der Weiche und dem Zwischenspeicher angeordnet sein. In diesem Fall kann die Sensoreinheit die Ausrichtung der Wertscheine entweder während des Transports von der Weiche zum Zwischenspeicher, oder nach der Entnahme eines im Zwischenspeicher zwischengespeicherten Wertscheins beim Transport von dem Zwischenspeicher zur Weiche ermitteln.

Es werden insbesondere alle eingegebenen Wertscheine, nachdem ihre Echtheit überprüft und ihre Ausrichtung ermittelt wurde, von dem ersten Transportpfad über die Weiche dem zweiten Transportpfad und somit dem Zwischenspeicher zugeführt. Nachdem alle Wertscheine eines zugeführten Wertscheinstapels in dem Zwischenspeicher gespeichert wurden und eine Bedienperson eine Bestätigungsinformation eingegeben hat, werden die im Zwischenspeicher zwischengespeicherten Wertscheine entsprechend ihrer jeweiligen Ausrichtung entweder direkt vom zweiten Transportpfad in den dritten Transportpfad und weiter zur Druckeinheit, oder über den Umweg von dem zweiten Transportpfad in den ersten und dann in den dritten Transportpfad transportiert, so dass alle Wertscheine unabhängig von ihrer Ausrichtung bei der Eingabe bedruckt werden können.

Die Weiche ist insbesondere derart ausgebildet, dass sie zwischen drei Weichenstellungen verstellbar ist, wobei bei einer ersten Weichenstellung ein Wertschein durch die Weiche zwischen dem ersten und dem zweiten Transportpfad, bei einer zweiten Weichenstellung zwischen dem zweiten und dem dritten Transportpfad und bei einer dritten Weichenstellung zwischen dem ersten und dem dritten Transportpfad gelenkt wird. Entsprechend stellt die Steuereinheit zum Transport eines Wertscheins von dem ersten in den zweiten Transportpfad die erste Weichenstellung, von dem zweiten in den ersten Transportpfad die erste Weichenstellung, von dem zweiten in den dritten Transportpfad die zweite Weichenstellung und von dem ersten in den dritten Transportpfad die dritte Weichenstellung ein.

Die Sensoreinheit umfasst vorzugsweise einen magnetischen Sensor, insbesondere einen Magnetic-Ink-Character-Recognition-Sensor (MICR-Sensor). Mit Hilfe dieses Sensors kann eine in einem MICR-Bereich von Schecks aufgebrachte magnetische Information ausgelesen werden, die insbesondere in Form von magnetischer Tinte oder magnetischen Toner aufgebracht ist. Über das Auslesen dieser magnetischen Information kann ermittelt werden, an welcher Seite des Wertscheins der MICR-Bereich angeordnet ist. In der Steuereinheit ist voreingestellt, ob der MICR-Bereich und der Druckbereich an der gleichen Seite des Wertscheins oder an unterschiedlichen Seiten des Wertscheins angeordnet sind, so dass über die Bestimmung der Seite, an der der MICR-Bereich angeordnet ist, auch ermittelt werden kann, welche Seite die Druckseite ist.

Es wird insbesondere ein sogenannter Quad-Magnetic-Ink-Character-Recognition-Sensor verwendet, mit dessen Hilfe der MICR-Bereich unabhängig von der Ausrichtung des Wertscheins ausgelesen werden kann, da ein solcher Sensor vier Sensoren umfasst, wobei jeweils zwei Sensoren an der ersten Seite des Transportpfades, entlang dessen die Wertscheine transportiert werden, und die anderen beiden Sensoren an der gegenüberliegenden zweiten Seite des Transportpfades angeordnet sind.

Bei einer alternativen Ausführungsform der Erfindung kann die Sensoreinheit zusätzlich oder alternativ auch eine Kamera umfassen, mit deren Hilfe mindestens ein Bild mit einer Abbildung des Wertscheins aufgenommen wird. Über den Vergleich dieser Abbildung mit den voreingestellten charakteristischen Merkmalen von Wertscheinen kann die Ausrichtung des Wertscheins auf einfache Weise bestimmt werden. Hierzu sind in der Steuereinheit insbesondere Bildverarbeitungsalgorithmen hinterlegt, die die Steuereinheit zur Ermittlung der festgelegten Druckseite abarbeitet.

Die Druckeinheit ist insbesondere derart ausgebildet, dass mit ihr nur ein einseitiger Druck auf dem Wertschein aufdruckbar ist, so dass ein besonders einfacher, kostengünstiger Aufbau erreicht wird. Aufgrund des einfachen Wendens über die Weiche von Wertscheinen, die falsch ausgerichtet sind, ist es nicht notwendig, eine komplex aufgebaute Druckeinheit zu verwenden, mit deren Hilfe die Wertscheine beidseitig bedruckbar sind. Unter einem falschen Ausrichten von Wertscheinen wird verstanden, dass diese Wertscheine nicht mit ihrer gewünschten festgelegten Druckseite dem Druckkopf zugewandt sind.

Weitere Merkmale und Vorteile der Erfindung ergeben sich aus der folgenden Beschreibung, die die Erfindung anhand von Ausführungsbeispielen in Zusammenhang mit den beigefügten Figuren näher erläutert.

Es zeigen:
- Figur 1: eine schematische Darstellung einer Vorrichtung zur Handhabung von Wertscheinen;
- Figur 2: eine schematische Darstellung eines Kopfmoduls der Vorrichtung nach Figur 1;
- Figur 3: eine schematische Darstellung eines Ausschnitts des Kopfmoduls nach Figur 2 in einem ersten Betriebszustand;
- Figur 4: eine schematische Darstellung des Ausschnitts des Kopfmoduls nach Figur 3 in einem zweiten Betriebszustand; und
- Figur 5: eine schematische Darstellung des Ausschnitts des Kopfmoduls nach den Figuren 3 und 4 in einem dritten Betriebszustand.

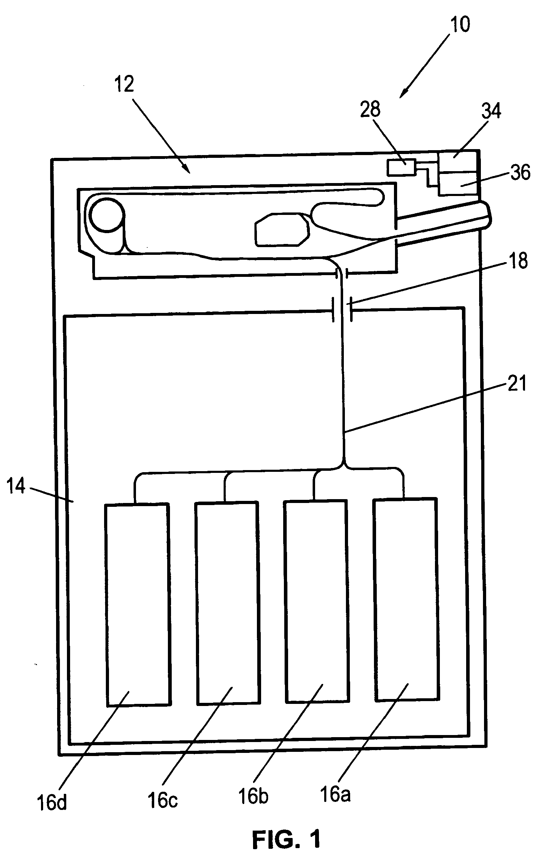

In Figur 1 ist eine schematische Darstellung einer Vorrichtung 10 zur Handhabung von Wertscheinen dargestellt. Bei der Vorrichtung 10 handelt es sich insbesondere um eine automatische Tresorkasse, ein automatisches Kassensystem und/oder einen Geldautomaten, wie einen Einzahlautomaten zum Einzahlen von Banknoten und Schecks.

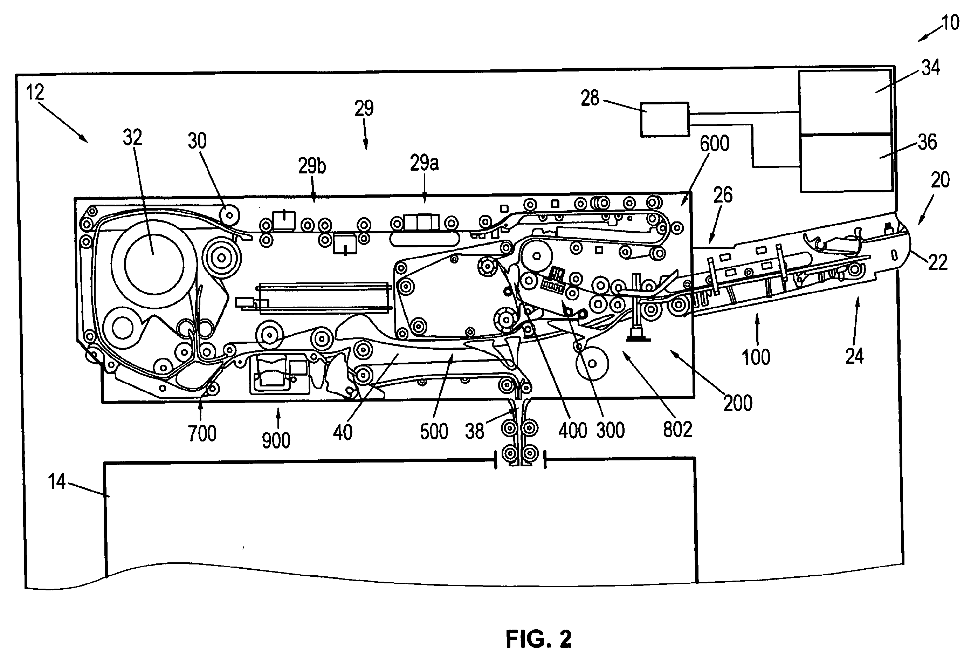

Die Vorrichtung 10 umfasst ein Kopfmodul 12 und einen Tresor 14. Der Aufbau des Kopfmoduls 12 ist im Zusammenhang mit Figur 2 näher beschrieben. In dem Tresor 14 sind vier Wertscheinkassetten 16a bis 16d angeordnet, in denen die Wertscheine aufgenommen werden können. Hierbei ist insbesondere eine der Wertscheinkassetten 16a bis 16d zur Aufnahme von Schecks und die anderen drei Wertscheinkassetten 16a bis 16d zur Aufnahme von Banknoten vorgesehen. Die Aufnahme von den Banknoten erfolgt insbesondere sortenrein, d.h. dass in einer Wertscheinkassette 16a bis 16d immer nur Banknoten einer Denomination aufgenommen sind. Alternativ kann auch eine Mischspeicherung erfolgen, d.h. dass in einer Wertscheinkassette 16a bis 16d Wertscheine unterschiedlicher Denominationen gemischt aufgenommen werden. Bei einer alternativen Ausführungsform können in dem Tresor 14 auch mehr als vier oder weniger als vier, insbesondre zwei, Wertscheinkassetten 16a bis 16d vorgesehen sein. Insbesondere kann eine sogenannte Reject-Kassette vorgesehen sein, in der Wertscheine aufgenommen werden, die fälschungsverdächtig sind und/oder Beschädigungen aufweisen. Bei einer bevorzugten Ausführungsform sind zwei Wertscheinkassetten 16a bis 16d, nämlich eine zur Aufnahme von Schecks und eine zur Aufnahme von Banknoten, vorgesehen.

Die Wertscheine können hierbei in den Wertscheinkassetten 16a bis 16d sowohl in gestapelter Form in einem Aufnahmebereich aufgenommen sein, als auch zwischen zwei Folienbändern aufgewickelt auf einem Rollenspeicher gespeichert werden. Es können auch unterschiedliche Wertscheinkassettenarten innerhalb des Tresors 14 verwendet werden.

Die Vorrichtung 10 kann ist im vorliegenden Ausführungsbeispiel als reine Einzahlungsvorrichtung ausgebildet sein, in der lediglich Wertscheine aufgenommen werden können. Alternativ kann sie auch als eine Recyclingvorrichtung ausgebildet sein, in die sowohl Wertscheine eingegeben als auch wieder Wertscheine ausgegeben werden können.

Der Tresor 14 weist einen Übergabeschlitz 18 auf, durch den die Wertscheine von dem Kopfmodul 12 dem Tresor 14 zugeführt werden. Von dem Übergabeschlitz 18 werden die Wertscheine über eine mit dem Bezugszeichen 21 bezeichnete Transporteinheit zu den Wertscheinkassetten 16a bis 16d transportiert.

In Figur 2 ist eine schematische Darstellung des Kopfmoduls 12 nach Figur 1 gezeigt. Das Kopfmodul 12 weist eine Ein- und Ausgabeeinheit 20 auf, über die die Wertscheine in Form eines Wertscheinstapels eingegeben werden können. Ferner können über diese Ein- und Ausgabeeinheit 20 auch wieder einzelne Wertscheine und/oder Wertscheinstapel an die Bedienperson der Vorrichtung 10 ausgegeben werden. Die Ein- und Ausgabeeinheit 20 weist insbesondere einen sogenannten Shutter 22 auf, über den eine Öffnung zum Zuführen und Ausgeben der Wertscheine geöffnet und geschlossen werden kann.

Ein über die Ein- und Ausgabeeinheit 20 eingegebener Wertscheinstapel wird mit Hilfe einer Transporteinheit 24 zu einer ersten Ausrichteinheit 100 transportiert. Mit Hilfe der ersten Ausrichteinheit 100 werden die Wertscheine des Wertscheinstapels in einer voreingestellten Ausrichtung ausgerichtet oder zumindest wird die Ausrichtung eines Teils der Wertscheine des Wertscheinstapels derart verändert, dass diese der voreingestellten Ausrichtung angenähert wird. Der ausgerichtete Wertscheinstapel wird mit Hilfe einer Transporteinheit 26 einer Vereinzelungseinheit 200 zugeführt, die die Wertscheine des Wertscheinstapels vereinzelt und die vereinzelten Wertscheine einer ersten Sensoreinheit 300 zuführt.

Die erste Sensoreinheit 300 umfasst eine Bilderfassungseinheit, mit deren Hilfe von jedem zugeführten Wertschein mindestens ein Bild mit einer Abbildung dieses Wertscheins aufgenommen wird. Eine Steuereinheit 28 der Vorrichtung 10 ermittelt in Abhängigkeit der Abbildung des Wertscheins in dem Bild mindestens ein Merkmal des Wertscheins und klassifiziert den Wertschein in Abhängigkeit dieses Merkmals in Schecks, Banknoten einer voreingestellten Währung und andere blattförmige Medien. Bei den anderen blattförmigen Medien kann es sich beispielsweise um Wertscheine einer anderen als der voreingestellten Währung handeln und/oder um sonstige blattförmige Medien, die von der Bedienperson der Vorrichtung fälschlicherweise eingegeben wurden. Beispielsweise kann es sich hierbei um Visitenkarten oder Kontoauszüge handeln. Die voreingestellte Währung ist insbesondere diejenige Währung, die mit Hilfe der Vorrichtung 10 gehandhabt, insbesondere in den Wertscheinkassetten 16a bis 16d aufgenommen, werden soll.

Diejenigen Wertscheine, die weder als Schecks noch als Banknoten der voreingestellten Währung klassifiziert wurden, werden über eine Weiche 400 in einen zweiten Zwischenspeicher 500 zur Zwischenspeicherung von blattförmigen Medien transportiert und in diesem vorzugsweise als zweiter Wertscheinstapel zwischengespeichert. Die Schecks und die Banknoten der voreingestellten Währung dahingegen werden über die Weiche 400 einer zweiten Ausrichteinheit 600 zugeführt. Mit Hilfe dieser zweiten Ausrichteinheit 600 werden die Schecks in einer ersten voreingestellten Soll-Ausrichtung ausgerichtet und die Banknoten in einer von der ersten Soll-Ausrichtung abweichenden zweiten Soll-Ausrichtung ausgerichtet. Insbesondere sind mehrere verschiedene Soll-Ausrichtungen für Banknoten unterschiedlicher Denominationen voreingestellt und die zweite Ausrichteinheit 600 richtet die Wertscheine nicht nur in Abhängigkeit davon, ob es sich um Schecks oder Banknoten handelt in unterschiedlichen voreingestellten Soll-Ausrichtungen aus, sondern auch noch zusätzlich in Abhängigkeit der Denomination der Banknoten.

Die ausgerichteten Wertscheine werden dann einer zweiten Sensoreinheit 29 zugeführt, mit deren Hilfe die Echtheit der Banknoten ermittelt wird und mit deren Hilfe magnetische Informationen der Schecks ausgelesen werden. Die Sensoreinheit 29 umfasst eine Banknotensensoreinheit 29a, mit deren Hilfe die Echtheit der Banknoten überprüft wird und eine Schecksensoreinheit 29b, mit deren Hilfe die Echtheit der Schecks überprüft wird und auf die Schecks aufgedruckte Informationen ausgelesen werden. Die erste Sensoreinheit 300 und die zweite Sensoreinheit 29 bilden zusammen mit der Steuereinheit 28 insbesondere ein Echtgeld- und Scheckerkennungsmodul. Bei der Ermittlung der Echtheit des Banknoten und/oder Schecks werden vorzugsweise auch mit Hilfe der Sensoreinheit 300 ermittelte Informationen berücksichtigt.

Anschließend werden die Wertscheine mit Hilfe weiterer Transportelemente, von denen eines beispielhaft mit dem Bezugszeichen 30 bezeichnet ist, in Richtung einer zweiten Weiche 700 transportiert. Über die zweite Weiche 700 werden alle Wertscheine des zuvor eingegebenen Wertscheinstapels, die als Schecks oder Banknoten der voreingestellten Währung klassifiziert wurden, zunächst einem ersten Zwischenspeicher 32 zugeführt und in diesem zwischengespeichert. Der Zwischenspeicher 32 ist insbesondere in Form eines Rollenspeichers ausgebildet, bei dem die aufzunehmenden Wertscheine zwischen zwei Folienbändern aufgewickelt aufgenommen sind. Nachdem alle Wertscheine des eingegebenen Wertscheinstapels in dem ersten Zwischenspeicher 32 oder dem zweiten Zwischenspeicher 500 aufgenommen sind, wird über eine Anzeigeeinheit 34 mindestens eine Information über die in dem ersten Zwischenspeicher 32 und/oder die in dem zweiten Zwischenspeicher 500 aufgenommenen Wertscheine an die Bedienperson ausgegeben. Diese Information umfasst insbesondere Informationen über die Anzahl der eingegebenen Wertscheine und/oder den Wert der Summe der Denominationen der eingegebenen Wertscheine, die in dem ersten Zwischenspeicher 32 aufgenommen sind. Ferner wird die Bedienperson insbesondere aufgefordert, über eine Eingabeeinheit 36 eine Bestätigungsinformation einzugeben.

Wenn in einem voreingestellten Zeitintervall nach der Aufforderung von der Bedienperson keine Eingabe der Bestätigungsinformation über die Eingabeeinheit 36 erfolgt und/oder wenn die Bedienperson eine ablehnende Eingabe tätigt, so werden die in dem ersten Zwischenspeicher 32 aufgenommenen Wertscheine aus diesem transportiert und einer Stapeleinheit 40 zugeführt, mit deren Hilfe ein erster Wertscheinstapel aus allen in dem ersten Zwischenspeicher 32 aufgenommenen Wertscheine gebildet wird. Ferner wird der in dem zweiten Zwischenspeicher 500 aufgenommene zweite Wertscheinstapel dem zweiten Zwischenspeicher 500 entnommen. Sowohl der erste Wertscheinstapel als auch der zweite Wertscheinstapel werden einer Stapelzusammenführungseinheit 802 zugeführt, mit deren Hilfe aus dem ersten und dem zweiten Wertscheinstapel ein einziger zusammengefügter Wertscheinstapel gebildet wird. Dieser zusammengefügte Wertscheinstapel wird anschließend über die Ein- und Ausgabeeinheit 20 wieder an die Bedienperson ausgegeben.

Erfolgt dahingegen durch die Bedienperson die Eingabe der Bestätigungsinformation in dem voreingestellten Zeitintervall nach der entsprechenden Aufforderung, so wird der zweite Wertscheinstapel dem zweiten Zwischenspeicher 500 entnommen und über die Ein- und Ausgabeeinheit 20 an eine Bedienperson ausgegeben.

Die in dem ersten Zwischenspeicher 32 zwischengespeicherten Wertscheine dahingegen werden entlang eines Transportpfades 38 dem Tresor 14 zugeführt und in den Wertscheinkassetten 16a bis 16d aufgenommen. Die in dem ersten Zwischenspeicher 32 zwischengespeicherten Schecks werden, bevor sie in den Tresor 40 transportiert werden, durch das Aufdrucken eines Entwertungsdruckbildes in einem vorbestimmten Druckbereich des Schecks entwertet. Hierzu ist zwischen der zweiten Weiche 700 und dem Transportpfad 38 eine Druckeinheit 900 zum Bedrucken der Schecks vorgesehen. Über die Weiche 700 werden die Schecks hierbei derart der Druckeinheit 900 zugeführt, dass der Druckbereich, auf den die Entwertungsinformation aufgedruckt werden soll, dem Druckkopf der Druckeinheit 900 zugewandt ist, so dass der Druckkopf diesen Druckbereich mit dem Entwertungsdruckbild bedrucken kann.

Durch das zuvor beschriebene Kopfmodul 12 wird erreicht, dass in einer Vorrichtung 10 zusammen Schecks und Banknoten gehandhabt werden können und diese beliebig gemischt in einem Stapel der Vorrichtung 10 zugeführt werden können. Hierdurch wird ein besonders hoher Bedienkomfort für eine Bedienperson der Vorrichtung 10 erreicht, da diese keine manuelle Vorsortierung der Wertscheine in Schecks und Banknoten vornehmen muss und auch nicht, wie bei bekannten Vorrichtungen, voreinstellen muss, welche Art von Wertscheinen zugeführt wird.

Nachdem die Schecks durch die Ausrichteinheit 600 in der voreingestellten ersten Soll-Ausrichtung und die Banknoten durch die Ausrichteinheit 600 in der voreingestellten zweiten Sollausrichtung ausgerichtet wurden, werden sowohl die Banknoten als auch die Schecks der Sensoreinheit 29 zugeführt.

Die Schecksensoreinheit 29b umfasst eine MICR-Leseeinheit, mit deren Hilfe auf einem MICR-Bereich eines Schecks aufgebrachte magnetische Informationen ausgelesen werden können. Eine solche MICR-Leseeinheit ist aus dem Dokument DE 10 2007 059 410 A1 bekannt. Der Aufbau und die Funktion einer solchen MICR-Leseeinheit werden hiermit durch Bezugnahme in die vorliegende Beschreibung aufgenommen. Die MICR-Leseeinheit umfasst insbesondere vier MICR-Sensoren zum Erfassen der in dem MICR-Bereich aufgebrachten magnetischen Informationen, so dass durch die MICR-Leseeinheit unabhängig davon, wie die Schecks in die Ein- und Ausgabeeinheit 20 eingegeben wurden, die in dem MICR-Bereich des Schecks enthaltenen Informationen ausgelesen werden können.

Zusätzlich zu dem MICR-Bereich ist auf jedem Scheck ein gewünschter Druckbereich festgelegt, auf dem zum Entwerten des Schecks ein Entwertungsdruckbild durch die Druckeinheit 900 aufgedruckt werden soll, so dass eine mehrfache Verarbeitung desselben Schecks vermieden wird. Die Seite (Vorderseite oder Rückseite) des Schecks, an der dieser Druckbereich angeordnet ist, wird im Folgenden als Druckseite des Schecks bezeichnet. Der MICR-Bereich und der Druckbereich können auf der gleichen Seite des Schecks oder alternativ auf den beiden verschiedenen Seiten des Schecks angeordnet sein.

Die Druckeinheit 900 weist einen Druckkopf 902 auf, mit dessen Hilfe das Entwertungsdruckbild auf dem Druckbereich des zu entwertenden Schecks aufgedruckt wird. Der Druckkopf 902 ist derart ausgebildet, dass nur Schecks, deren Druckseite ihm zugewandt ist, durch ihn bedruckt werden können. Der Druckkopf ist insbesondere ortsfest angeordnet, so dass er nicht von der einen Seite des Transportpfades, entlang dessen die Schecks transportiert werden, auf die andere Seite des Transportpfades geschwenkt werden kann. Insbesondere wird eine Druckeinheit 900 verwendet, die nur genau einen Druckkopf 902 oder zwei Druckköpfe 902 aufweist, wobei diese beiden Druckköpfe 902 an der gleichen Seite des Transportpfades angeordnet sind.

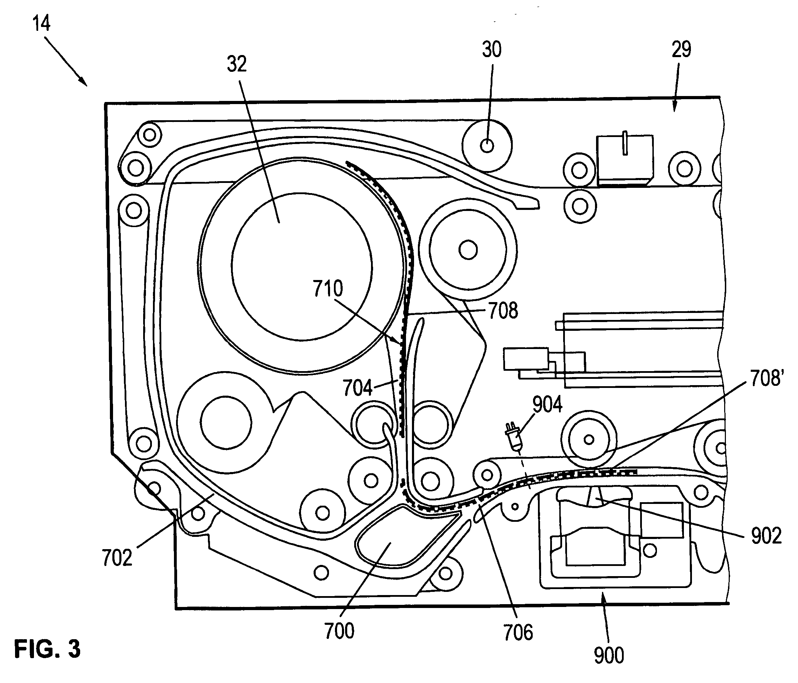

Damit ein der Druckeinheit 900 zugeführter Scheck in der erforderlichen Weise in dem Druckbereich mit dem Entwertungsdruckbild bedruckt werden kann, muss somit dieser Scheck der Druckeinheit 900 derart zugeführt werden, dass seine Druckseite dem Druckkopf 902 zugewandt ist. Wie im Folgenden im Zusammenhang mit den Figuren 3 bis 5 näher beschrieben, wird dies durch die entsprechende Ansteuerung der Weiche 700 durch die Steuereinheit 28 erreicht. Hierzu ermittelt die Steuereinheit 28 zunächst, wie der Scheck ausgerichtet ist, d.h. die Steuereinheit 28 ermittelt, ob die von der Sensoreinheit 300 detektierte Oberseite oder Unterseite die zu bedruckende Druckseite ist.

Die Ermittlung erfolgt alternativ oder zusätzlich mit Hilfe der MICR-Leseeinheit. Über die MICR-Leseeinheit kann die Steuereinheit 28 ermitteln, an welcher Seite der MICR-Bereich des Schecks angeordnet ist. In der Steuereinheit 28 ist hinterlegt, ob der MICR-Bereich und der Druckbereich an der gleichen Seite oder an gegenüberliegenden Seiten des Schecks angeordnet sind. Somit kann die Steuereinheit 28, wenn sie weiß, auf welcher Seite der MICR-Bereich ist, ermitteln, welche Seite des Schecks die Druckseite ist.

Bei einer alternativen Ausführungsform der Erfindung kann die Ermittlung der Druckseite des Schecks auch in Abhängigkeit des mit Hilfe der Sensoreinheit 300 zum Klassifizieren der eingegebenen blattförmigen Medien erzeugten Bildes mit der Abbildung des Schecks erfolgen. Die Steuereinheit 28 vergleicht hierzu insbesondere, ob in der Abbildung charakteristische voreingestellte Merkmale von Schecks, die nur an einer Seite von Schecks angeordnet sind, vorhanden sind und bestimmt über diesen Vergleich, welche Seite des eingegebenen Schecks die Druckseite ist.

Die eingegebenen Schecks werden, wie auch die Banknoten, von der Sensoreinheit 29 über einen ersten Transportpfad 702 zur Weiche 700 transportiert, die in einer ersten Weichenstellung die Schecks und Banknoten in einem zweiten Transportpfad 704 umlenkt, wobei dieser zweite Transportpfad 704 die Weiche 700 mit dem ersten Zwischenspeicher 32 verbindet. Auf diese Weise werden zunächst alle Banknoten und Wertscheine des eingegebenen Stapels, die nicht in den zweiten Zwischenspeicher 500 aufgenommen wurden, in dem ersten Zwischenspeicher 32 aufgenommen und in diesem zwischengespeichert. Anschließend wird der Bedienperson über die Anzeigeeinheit 34 die Information über die aufgenommenen Wertscheine angezeigt. Der erste Zwischenspeicher 32 ist insbesondere als ein Rollenspeicher ausgebildet, bei dem die Wertscheine zwischen zwei Folienbändern aufgenommen aufgewickelt werden.

Nachdem die Bedienperson eine Bestätigungsinformation über die Eingabeeinheit 36 eingegeben hat, werden die in dem ersten Zwischenspeicher 32 aufgenommenen Banknoten und Schecks wieder diesem entnommen und über den Übergabeschlitz 18 in den Tresor 14 transportiert. Die Banknoten und/oder die Schecks werden dort in den Wertscheinkassetten 16a bis 16d aufgenommen, wobei die Schecks zuvor mit Hilfe der Druckeinheit 900 durch Aufdrucken des Entwertungsdruckbildes entwertet werden.

In Figur 3 ist ein Ausschnitt des Kopfmoduls 14 nach Figur 2 dargestellt, wobei bei dem in Figur 3 gezeigten ersten Betriebszustand ein Scheck 708 bereits teilweise dem Zwischenspeicher 32 entnommen ist und zum Teil in dem zweiten Transportpfad 704 angeordnet ist. Die Druckseite des Schecks 708 ist durch die Punktlinie 710 angedeutet. Bei der in Figur 3 gezeigten Ausrichtung steuert die Steuereinheit 28 die Weiche 700 derart an, dass diese in einer zweiten Weichenstellung eingestellt ist, in der sie den Scheck 708 von dem zweiten Transportpfad in einen dritten Transportpfad 706 lenkt, wobei dieser dritte Transportpfad die Weiche 700 mit der Druckeinheit 900 verbindet. Wie durch den gestrichelten Scheck 708' dargestellt, wird der Scheck 708, 708' in diesem Fall der Druckeinheit 900 derart zugeführt, dass die Druckseite 710 dem Druckkopf 902 zugewandt ist, so dass der Druckkopf 902 das Entwertungsdruckbild auf den Druckbereich an der Druckseite 710 aufdrucken kann.

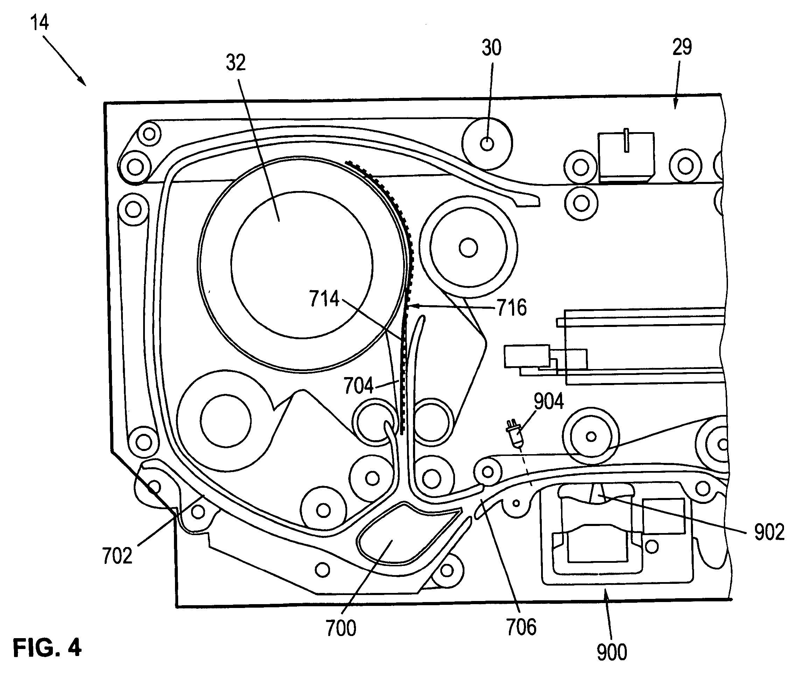

In Figur 4 ist ein Ausschnitt des Kopfmoduls 14 in einem zweiten Betriebszustand dargestellt, bei dem in dem zweiten Transportpfad 704 ein Scheck 714 angeordnet ist, dessen Druckseite 716, verglichen mit dem Scheck 710 in Figur 3, an der gegenüberliegenden Seite des Schecks 714 angeordnet ist. In diesem Fall würde der Scheck 714, wenn er direkt von dem zweiten Transportpfad 704 in den dritten Transportpfad 706 transportiert würde, der Druckeinheit 900 derart zugeführt, dass seine Druckseite 716 von dem Druckkopf 902 abgewandt wäre, so dass das Entwertungsdruckbild nicht im Druckbereich aufgedruckt und der Scheck 714 somit nicht auf der gewünschten Seite entwertet werden könnte. Deswegen steuert die Steuereinheit 28 in diesem Fall die Weiche 700 derart an, dass diese zunächst in der ersten Weichenstellung angeordnet ist und den Scheck 714 wieder zurück in den ersten Transportpfad 702 lenkt. Der Scheck 714 wird hierbei soweit zurück in den ersten Transportpfad transportiert, dass er vollständig in dem ersten Transportpfad 702 angeordnet ist.

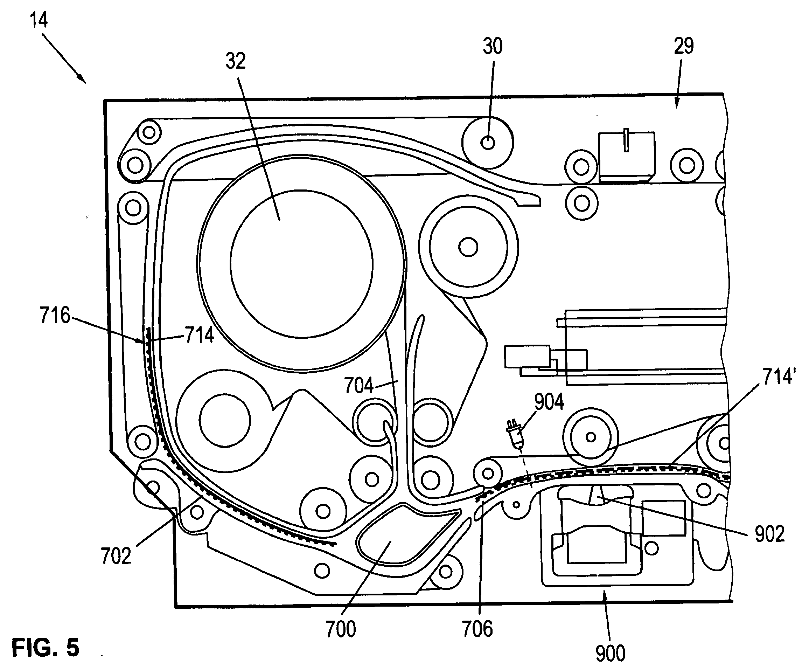

In Figur 5 ist das Kopfmodul 14 in einem dritten Betriebszustand gezeigt, bei dem der Scheck 714 zurück in den ersten Transportpfad 704 transportiert wurde. Anschließend steuert die Steuereinheit 28 die Weiche 700 derart an, dass diese in der dritten Weichenstellung angeordnet ist, in der sie den Scheck 714 von dem ersten Transportpfad 702 in den dritten Transportpfad 706 lenkt und somit der Druckeinheit 900 zuführt. Wie durch den gestichelten und mit dem Bezugszeichen 714' bezeichneten Scheck angedeutet, wird der Scheck 714 auf diese Weise der Druckeinheit 900 derart zugeführt, dass seine Druckseite 716 dem Druckkopf 902 zugewandt ist, so dass der Druckbereich mit dem Entwertungsdruckbild von dem Druckkopf 902 bedruckt werden kann.

Somit können Schecks 714, 714', die "falsch herum" in dem Zwischenspeicher 32 aufgenommen sind, d.h., die derart aufgenommen sind, dass sie bei einem direkten Zuführen von dem Zwischenspeicher 32 zu der Druckeinheit 900 über die zweite Weichenstellung nicht mit dem Entwertungsdruckbild im Druckbereich bedruckt werden könnten, auf einfache Weise gewendet werden. Somit können alle Schecks 708, 708', 714, 714', unabhängig von ihrer Ausrichtung durch den einen Druckkopf 902 der Druckeinheit 900 bedruckt werden können. Daher kann eine einfach und kostengünstig aufgebaute Druckeinheit 900 verwendet werden. Ferner ist es durch das zuvor beschriebene Verfahren nicht notwendig, eine extra Wendeeinheit zum Wenden der Schecks 700, 714 vorzusehen, sondern das Wenden erfolgt mit Hilfe von ohnehin schon für den Transport notwendigen Elementen.

Stromaufwärts der Druckeinheit 900 ist ein erster Reflektionssensor 904 und stromabwärts der Druckeinheit 900 ein zweiter Reflektionssensor 906 vorgesehen. Die Reflektionssensoren 904, 906 sind derart angeordnet, dass mit ihrer Hilfe das Reflektionsverhalten des Druckbereichs zum einen vor dem Bedrucken und zum anderen nach dem Bedrucken mit dem Entwertungsdruckbild ermittelt werden kann. Hierzu beleuchten die Reflektionssensoren 904, 906 den Druckbereich jeweils mit einem Licht einer voreingestellten Helligkeit und detektieren das von dem Druckbereich reflektierte Licht, insbesondere dessen Helligkeit.

Die Steuereinheit 28 ermittelt in Abhängigkeit des Signals von dem ersten Reflektionssensor 904 und dem zweiten Reflektionssensor 906, ob der Druckbereich planmäßig mit dem Entwertungsdruckbild bedruckt wurde, oder ob ein Fehler aufgetreten ist. Beispielsweise kann das zum Bedrucken des Druckbereichs verwendete Druckerband des Druckkopfs gerissen und/oder die verwendete Tinte aufgebraucht sein. Da in diesem Fall der Scheck 708 ,708' 714, 714' nicht planmäßig entwertet würde, und ggf. sogar mehrfach verarbeitet werden könnte, ist es notwendig, zu überprüfen, ob das Entwertungsdruckbild planmäßig aufgebracht wurde.

Die Steuereinheit 28 ermittelt in Abhängigkeit des Signals des ersten Reflektionssensors 904 insbesondere einen ersten Wert eines Maßes für die Stärke des Reflektionsverhaltens und in Abhängigkeit des Signals des zweiten Reflektionssensors 906 einen zweiten Wert dieses Maßes für die Stärke des Reflektionsverhaltens. Anschließend ermittelt die Steuereinheit 28 einen Differenzwert durch Subtraktion des ersten Werts von dem zweiten Wert oder des zweiten Werts von dem ersten Wert und vergleicht diesen Differenzwert mit einem voreingestellten Mindestdifferenzwert. Ergibt der Vergleich, dass der ermittelte Differenzwert größer als der voreingestellte Mindestdifferenzwert ist, so wurde das Entwertungsdruckbild korrekt aufgedruckt. Ist der ermittelte Differenzwert dahingegen kleiner oder gleich als der voreingestellte Mindestdifferenzwert, wird hieraus geschlossen, dass das Entwertungsdruckbild nicht korrekt aufgebracht wurde. In diesem Fall wird insbesondere eine Fehlermeldung über die Anzeigeeinheit 34 ausgegeben, so dass der Betreiber der Vorrichtung 10 darüber informiert wird, dass die Druckeinheit 900 überprüft werden muss.

Das Entwertungsdruckbild umfasst insbesondere eine Entwertungsinformation, Informationen über das Datum der Eingabe des Schecks 708, 708', 714, 714', Informationen über eine Transaktionsnummer und/oder Informationen über das Konto, auf dem der Betrag des Schecks 708, 708', 714, 714' gutgeschrieben wurde.

### Bezugszeichenliste

- 10: Vorrichtung
- 12: Kopfmodul
- 14: Tresor
- 16a bis 16d: Wertscheinkassette
- 18: Übergabeschlitz
- 20: Ein- und Ausgabeeinheit
- 21: Transporteinheit
- 22: Shutter
- 24, 26: Transporteinheit
- 28: Steuereinheit
- 29, 29a, 29b: Sensoreinheit
- 30: Transportelement
- 32: Zwischenspeicher
- 34: Anzeigeeinheit
- 36: Eingabeeinheit
- 38: Transportpfad
- 40: Stapeleinheit
- 100: Ausrichteinheit
- 200: Vereinzelungseinheit
- 300: Sensoreinheit
- 400: Weiche
- 500: Zwischenspeicher
- 600: Ausrichteinheit
- 700: Weiche
- 702, 704, 706: Transportpfad
- 708, 708', 714, 714': Scheck
- 710, 716: Druckseite
- 802: Stapelzusammenführungseinheit
- 900: Druckeinheit
- 902: Druckkopf
- 904, 906: Reflektionssensor

## Patentansprüche

1. Vorrichtung zum Entwerten von Wertscheinen,
mit einer Transporteinheit (24, 26, 30) zum Transportieren der Wertscheine (708, 708', 714, 714') entlang eines ersten Transportpfads (702), eines zweiten Transportpfads (704) und eines dritten Transportpfads (706),
einer Druckeinheit (900) mit einem Druckkopf (902) zum Bedrucken eines an einer Bedruckseite (710) eines Wertscheins (708, 708', 714, 714') angeordneten, voreingestellten Bedruckbereiches des Wertscheins (708, 708', 714, 714') mit einem Entwertungsdruckbild,
einer Weiche (700) zum Umlenken von Wertscheinen (708, 708', 714, 714') zwischen dem ersten Transportpfad (702), dem zweiten Transportpfad (704) und dem dritten Transportpfad (706),
einer Steuereinheit (28) zur Steuerung der Weiche (700),
einer Sensoreinheit (29, 300) zur Ermittlung der Ausrichtung der Wertscheine (708, 708', 714, 714'), und
mit einem Zwischenspeicher (32) zur Zwischenspeicherung der Wertscheine (708, 708', 714, 714'),
wobei der zweite Transportpfad (704) die Weiche (700) mit dem Zwischenspeicher (32) und der dritte Transportpfad (706) die Weiche (700) mit der Druckeinheit (900) verbindet, und
wobei die Steuereinheit (28) in Abhängigkeit der ermittelten Ausrichtung eines dem Zwischenspeicher (32) entnommenen, zu entwertenden Wertscheins (708, 708', 714, 714') die Weiche (700) derart ansteuert, dass diese zu entwertenden Wertschein (708, 708') entweder direkt vom zweiten Transportpfad (704) in den dritten Transportpfad (706) lenkt, oder den Wertschein (714, 714')zunächst von dem zweiten Transportpfad (704) in den ersten Transportpfad (702) und dann von den ersten Transportpfad (702) in den dritten Transportpfad (706) lenkt,
wobei ferner die Steuereinheit (28) die Weiche (700) derart ansteuert, dass zunächst alle Wertscheine (708, 708', 714, 714') von dem ersten Transportpfad (702) über die Weiche (700) dem zweiten Transportpfad (704) und somit dem Zwischenspeicher (32) zugeführt werden, und wobei anchließend die im Zwischenspeicher (32) zwischengespeicherten Wertscheine (708, 708', 714, 714') entsprechend ihrer jeweiligen Ausrichtung entweder direkt vom zweiten Transportpfad (704) in den dritten Transportpfad (706) und weiter zur Druckeinheit (900), oder über den Umweg von dem zweiten Transportpfad (704) in den ersten und dann in den dritten Transportpfad (706) transportiert werden, so dass alle Wertscheine (708, 708', 714, 714') mit ihrer Druckseite (710) dem Druckkopf (902) der Druckeinheit (900) zugewandt sind.

2. Vorrichtung (10) nach Anspruch 1, wobei ferner die Steuereinheit (28) in Abhängigkeit der ermittelten Ausrichtung ermittelt, welche Seite des Wertscheins (708, 708', 714, 714') dem Druckkopf (902) zugewandt wäre, wenn der Wertschein (708, 708', 714, 714') direkt vom zweiten Transportpfad (704) in den dritten Transportpfad (706) und weiter zur Druckeinheit (900) transportiert würde, und wobei die Steuereinheit (28) die Weiche (700) derart ansteuert, dass diese den Wertschein (708, 708') direkt vom zweiten Transportpfad (704) in den dritten Transportpfad (706) lenkt, wenn diese ermittelte Seite die Druckseite (710) des Wertscheins (708, 708') ist, und wobei ansonsten die Steuereinheit (28) die Weiche (700) derart ansteuert, dass diese den Wertschein (714, 714') zunächst von dem zweiten Transportpfad (704) in den ersten Transportpfad (702) und dann von dem ersten Transportpfad (702) in den dritten Transportpfad (706) lenkt.

3. Vorrichtung (10) nach einem der vorhergehenden Ansprüche, wobei ferner die Sensoreinheit (29, 300) im ersten Transportpfad (702) angeordnet ist.

4. Vorrichtung (10) nach Anspruch 1 oder 2, wobei ferner die Sensoreinheit (29, 300) in zweiten Transportpfad (704) angeordnet ist.

5. Vorrichtung (10) nach einem der vorhergehenden Ansprüche, wobei ferner die Weiche (700) in einer ersten Weichenstellung einen Wertschein (708, 708', 714, 714') zwischen dem ersten Transportpfad (702) und dem zweiten Transportpfad (704) umlenkt, in einer zweiten Weichenstellung zwischen dem zweiten Transportpfad (704) und dem dritten Transportpfad (706) umlenkt und in einer dritten Weichenstellung zwischen dem ersten Transportpfad (702) und dem dritten Transportpfad (706) umlenkt.

6. Vorrichtung (10) nach einem der vorhergehenden Ansprüche, wobei ferner die Sensoreinheit (29) mindestens einen Sensor zum Detektieren von Druckbildern aus magnetischer Tinte und/oder magnetischem Toner, insbesondere Magnetic-Ink-Character-Recognition-Sensor, umfasst.

7. Vorrichtung (10) nach Anspruch 6, wobei ferner die Sensoreinheit (29) eine Seite eines Wertschein (708, 708', 714, 714') detektiert, auf der eine magnetische Information aufgebracht ist, und dass die Steuereinheit (28) in Abhängigkeit der Seite, auf der die magnetische Information aufgebracht ist, ermittelt, welche Seite des Wertscheins (708, 708', 714, 714') die Druckseite (710, 716) ist.

8. Vorrichtung (10) nach einem der vorhergehenden Ansprüche, wobei ferner mit Hilfe der Druckeinheit (900) nur ein einseitiger Druck auf dem Wertschein (708, 708', 714, 714') aufdruckbar ist.

## Claims

1. A device for cancelling notes of value,
comprising a transport unit (24, 26, 30) for transporting the notes of value (708, 708', 714, 714') along a first transport path (702), a second transport path (704), and a third transport path (706),
a printing unit (900) having a print head (902) for imprinting a preset printing area of the note of value (708, 708', 714, 714') located on a print side (710) of a note of value (708, 708', 714, 714') with a cancellation print image,
a sorting gate (700) for diverting notes of value (708, 708', 714, 714') between the first transport path (702), the second transport path (704), and the third transport path (706),
a control unit (28) for controlling the sorting gate (700),
a sensor unit (29, 300) for determination of the orientation of the notes of value (708, 708', 714, 714'), and
comprising an intermediate storage (32) for intermediate storage of the notes of value (708, 708', 714, 714'),
wherein the second transport path (704) connects the sorting gate (700) with the intermediate storage (32), and the third transport path (706) connects the sorting gate (700) with the printing unit (900), and
wherein the control unit (28) controls the sorting gate (700) dependent on the determined orientation of a note of value (708, 708', 714, 714') withdrawn from the intermediate storage (32) to be cancelled such that the sorting gate directs the note of value (708, 708') to be cancelled either directly from the second transport path (704) into the third transport path (706), or directs the note of value (714, 714') first from the second transport path (704) into the first transport path (702), and then from the first transport path (702) into the third transport path (706),
wherein further the control unit (28) controls the sorting gate (700) such that first all notes of value (708, 708', 714, 714') are fed from the first transport path (702) via the sorting gate (700) to the second transport path (704) and thus to the intermediate storage (32), and wherein thereafter the notes of value (708, 708', 714, 714') intermediately stored in the intermediate storage (32) are, dependent on their respective orientation, transported either directly from the second transport path (704) into the third transport path (706) and further to the printing unit (900), or via the detour from the second transport path (704) to the first and then to the third transport path (706) so that all notes of value (708, 708', 714, 714') face the print head (902) of the printing unit (900) with their print side (710).

2. The device (10) according to claim 1, wherein further the control unit (28) determines dependent on the determined orientation which side of the note of value (708, 708', 714, 714') would face the print head (902) if the note of value (708, 708', 714, 714') were transported directly from the second transport path (704) into the third transport path (706) and further to the printing unit (900), and wherein the control unit (28) controls the sorting gate (700) such that the sorting gate directs the note of value (708, 708') directly from the second transport path (704) into the third transport path (706) if said determined side is the print side (710) of the note of value (708, 708'), and wherein otherwise the control unit (28) controls the sorting gate (700)' such that the sorting gate directs the note of value (714, 714') first from the second transport path (704) into the first transport path (702) and then from the first transport path (702) into the third transport path (706).

3. The device (10) according to one of the preceding claims, wherein further the sensor unit (29, 300) is arranged in the first transport path (702).

4. The device (10) according to claim 1 or 2, wherein further the sensor unit (29, 300) is arranged in the second transport path (704).

5. The device (10) according to one of the preceding claims, wherein further the sorting gate (700) in a first sorting gate position diverts a note of value (708, 708', 714, 714') between the first transport path (702) and the second transport path (704), diverts it in a second sorting gate position between the second transport path (702) and the third transport path (706), and diverts it in a third sorting gate position between the first transport path (702) and the third transport path (706).

6. The device (10) according to one of the preceding claims, wherein further the sensor unit (29) comprises at least one sensor for detecting print images consisting of magnetic ink and/or magnetic toner, in particular a magnetic ink character recognition sensor.

7. The device (10) according to claim 6, wherein further the sensor unit (29) detects a side of a note of value (708, 708', 714, 714') on which a magnetic information is provided, and that the control unit (28) determines which side of the note of value (708, 708', 714, 714') is the print side (710, 716) dependent on the side on which the magnetic information is provided.

8. The device (10) according to one of the preceding claims, wherein further by means of the printing unit (900) only a single-sided print is imprintable on the note of value (708, 708', 714, 714').

## Revendications

1. Dispositif d'oblitération de documents de valeur,
comprenant une unité de transport (24, 26, 30) permettant de transporter les documents de valeur (708, 708', 714, 714') le long d'un premier trajet de transport (702), d'un deuxième trajet de transport (704) et d'un troisième trajet de transport (706),
une unité d'impression (900) présentant une tête d'impression (902) permettant d'imprimer une image imprimée d'oblitération sur une zone d'impression du document de valeur (708, 708', 714, 714') préétablie agencée sur une face d'impression (710) d'un document de valeur (708, 708', 714, 714'),
un aiguillage (700) permettant d'aiguiller les documents de valeur (708, 708', 714, 714') entre le premier trajet de transport (702), le deuxième trajet de transport (704) et le troisième trajet de transport (706),
une unité de commande (28) permettant de commander l'aiguillage (700),
une unité de détection (29, 300) permettant de déterminer l'orientation des documents de valeur (708, 708', 714, 714'), et
comprenant un dispositif de stockage intermédiaire (32) permettant le stockage intermédiaire des documents de valeur (708, 708', 714, 714'),
le deuxième trajet de transport (704) reliant l'aiguillage (700) au dispositif de stockage intermédiaire (32) et le troisième trajet de transport (706) reliant l'aiguillage (700) à l'unité d'impression (900), et
l'unité de commande (28) commandant l'aiguillage (700) en fonction de l'orientation déterminée d'un document de valeur (708, 708', 714, 714') à oblitérer prélevé du dispositif de stockage intermédiaire (32), de telle sorte que ledit aiguillage dirige le document de valeur (708, 708') à oblitérer soit directement du deuxième trajet de transport (704) dans le troisième trajet de transport (706), soit dirige le document de valeur (714, 714') tout d'abord du deuxième trajet de transport (704) dans le premier trajet de transport (702) puis du premier trajet de transport (702) dans le troisième trajet de transport (706),
l'unité de commande (28) commandant en outre l'aiguillage (700) de telle manière que tous les documents de valeur (708, 708', 714, 714') sont tout d'abord amenés du premier trajet de transport (702) au deuxième trajet de transport (704) par l'intermédiaire de l'aiguillage (700) et donc au dispositif de stockage intermédiaire (32), et les documents de valeur (708, 708', 714, 714') stockés de manière intermédiaire dans le dispositif de stockage intermédiaire (32) étant ensuite transportés conformément à leur orientation respective soit directement du deuxième trajet de transport (704) dans le troisième trajet de transport (706) et plus loin vers l'unité d'impression (900), ou par l'intermédiaire de la déviation du deuxième trajet de transport (704) dans le premier puis dans le troisième trajet de transport (706), de sorte que tous les documents de valeur (708, 708', 714, 714') sont tournés avec leur face d'impression (710) vers la tête d'impression (902) de l'unité d'impression (900).

2. Dispositif (10) selon la revendication 1, l'unité de commande (28) déterminant en outre en fonction de l'orientation quelle face du document de valeur (708, 708', 714, 714') serait tournée vers la tête d'impression (902) si le document de valeur (708, 708', 714, 714') était transporté directement du deuxième trajet de transport (704) dans le troisième trajet de transport (706) et plus loin vers l'unité d'impression (900), et l'unité de commande (28) commandant l'aiguillage (700) de telle sorte que ce dernier dirige le document de valeur (708, 708') directement du deuxième trajet de transport (704) dans le troisième trajet de transport (706) lorsque cette face déterminée est la face d'impression (710) du document de valeur (708, 708'), et, par ailleurs, l'unité de commande (28) commandant l'aiguillage (700) de telle manière que ce dernier dirige le document de valeur (714, 714') tout d'abord du deuxième trajet de transport (704) dans le premier trajet de transport (702) puis du premier trajet de transport (702) dans le deuxième trajet de transport (706).

3. Dispositif (10) selon l'une quelconque des revendications précédentes, l'unité de détection (29, 300) étant en outre agencée dans le premier trajet de transport (702).

4. Dispositif (10) selon la revendication 1 ou 2, l'unité de détection (29, 300) étant en outre agencée dans le deuxième trajet de transport (704).

5. Dispositif (10) selon l'une quelconque des revendications précédentes, l'aiguillage (700), dans une première position d'aiguillage, aiguillant en outre un document de valeur (708, 708', 714, 714') entre le premier trajet de transport (702) et le deuxième trajet de transport (704), dans une deuxième position d'aiguillage, entre le deuxième trajet de transport (704) et le troisième trajet de transport (706) et dans une troisième position d'aiguillage, entre le premier trajet de transport (702) et le troisième trajet de transport (706).

6. Dispositif (10) selon l'une quelconque des revendications précédentes, l'unité de détection (29) comprenant en outre au moins un capteur permettant de détecter des images imprimées à partir d'une encre magnétique et/ou d'un toner magnétique, en particulier un capteur de reconnaissance de caractère à encre magnétique.

7. Dispositif (10) selon la revendication 6, l'unité de détection (29) détectant en outre une face d'un document de valeur (708, 708', 714, 714') sur laquelle une information magnétique est appliquée, et l'unité de commande (28) déterminant en outre en fonction de la face sur laquelle l'information magnétique est appliquée quelle face du document de valeur (708, 708', 714, 714') est la face d'impression (710, 716).

8. Dispositif (10) selon l'une quelconque des revendications précédentes, une impression sur une seule face du document de valeur (708, 708', 714, 714') pouvant en outre être mise en oeuvre à l'aide de l'unité d'impression (900).
